Europäisches Patentamt

European Patent Office

Office européen des brevets

(11) Publication number: **0 216 476**
**A1**

# (12) EUROPEAN PATENT APPLICATION

(21) Application number: 86306035.6

(22) Date of filing: 05.08.86

(51) Int. Cl.⁴: **F16D 13/68**

(30) Priority: 26.08.85 US 768991

(43) Date of publication of application:
01.04.87 Bulletin 87/14

(84) Designated Contracting States:
DE FR GB

(71) Applicant: **Borg-Warner Automotive, Inc.
3001, West Big Beaver Road
Troy Michigan 48048(US)**

(72) Inventor: **Frantz, Robert Arthur
4155 Three Oaks, Apt. 3B
Troy Michigan 48098(US)**
Inventor: **Lech, Thaddeus, Jr.**
**P.O. Box. 238**
**Sterling Heights Michigan 48078(US)**

(74) Representative: **Allden, Thomas Stanley et al
A.A. THORNTON & CO. Northumberland
House 303-306 High Holborn
London WC1V 7LE(GB)**

(54) Clutch driven plate assembly with proportioning friction lag.

(57) A method and device utilized in a conventional clutch driven plate assembly (l0) to provide a secondary friction lag in a manner which causes the total friction lag in the clutch to operate in a proportioning manner to the damper torque. The device comprises a wrap spring (4l) positioned within and shorter than the working length (44 & 45) of a damper spring (39) and preloaded a specified amount against the inner diameter of the spring coils (44) causing friction between itself and the coils to inhibit the full free compression and release of the spring, thus producing a friction lag. Other types of friction lag devices include an elastomer plug (95) taken alone or with a non-compressible core, or a damper spring encapsulated in an elastomer.

Fig. 1.

# CLUTCH DRIVEN PLATE ASSEMBLY WITH PROPORTIONING FRICTION LAG

The present invention relates to a friction lag device utilized for the damper springs of a clutch driven plate assembly.

The purpose of a secondary friction lag device in a clutch assembly is to improve vehicle driveline performance by removing a larger spectrum of vibration and transmission gear rattles better than a conventional assembly with only one friction lag. In a conventional clutch plate assembly, excessive driveline energy, which causes vibration and rattle, is removed by operating a friction lag device which mechanically changes the friction to heat. The amount of friction lag is fixed at assembly and maintained for the life of the assembly by shims and a suitable spring force. The amount of friction lag is normally set at a happy medium which gives the best overall performance through the entire driving range. Since the friction lag can only be set at one level, it may not operate satisfactorily during all driving conditions, especially with diesel engines which have very heavy power impulses or with four cylinder engines which have "bad spots" of irregular impulses.

For example, in a diesel engine application, if a heavy friction lag is selected to operate properly when the engine is lugging, it may be too heavy to operate for lighter impulses at highway cruising speed. It this were the case, an optimum friction lag could not be selected to operate with maximum efficiency for both conditions. A heavy friction lag is required during lugging and a light friction lag for cruising, and with only one friction lag selection possible, only a compromise friction lag could be used for both conditions or the lugging condition might be ignored since it is not as frequent.

As another example, in a four cylinder engine application, if a medium friction lag is selected to operate properly during a 2500 rpm engine "bad spot", it may be insensitive during low engine braking torque when the vehicle is coasting in third or fourth gear. Again, both conditions require different friction lags for best operation, therefore, a happy medium must be struck if possible or one condition will be compromised. The present invention overcomes this problem by providing a friction lag in proportion to driving conditions.

The present invention comprehends the provision of a novel clutch driven plate assembly with proportioning friction lag; that is, a lighter friction lag with light damper torque, medium friction lag with medium damper torque, and maximum friction lag for heavy damper torque. This is accomplished by positioning a wrap spring within each damper spring, wherein the wrap spring is shorter than the working length of the damper spring and is preloaded a predetermined amount acting against the internal diameter of the spring coils to cause friction between the wrap spring and the coils. This action inhibits the full free compression and release of the spring resulting in a friction lag which is proportional to the damper torque. The secondary friction may either supplement the conventional fixed friction lag at the hub pilot diameter for the clutch assembly or may be used as the sole friction lag in a conventional or cam type clutch assembly as disclosed in U.S. Patent No. 4,556,136, issued December 3, 1985.

The present invention also comprehends the provision of a clutch driven plate assembly with a proportional friction lag device which will inhibit the free resonance of the normal damper springs and driveline components in a manner equivalent to a normally produced friction lag. In addition to a wrap spring, a ferrule is positioned within each end of the damper spring to cooperate with the wrap spring. Alternatively, a resilient plug may be substituted for the wrap spring or the damper spring be encapsulated in an elastomeric material.

Further objects are to provide a construction of maximum simplicity, efficiency, economy and ease of assembly and operation, and such further objects, advantages and capabilities as will later more fully appear and are inherently possessed thereby.

Figure I is a rear elevational view with portions broken away of a clutch driven plate assembly utilizing the friction lag means of the present invention.

Figure 2 is an enlarged cross sectional view of the clutch plate assembly taken on the irregular line 2-2 of Figure I.

Figure 3 is a side elevational view of a wrap spring utilized with a clutch damper spring.

Figure 4 is an end view of the wrap spring of Figure 3.

Figure 5 is an elevational view of an alternative form of wrap spring.

Figure 6 is an end view of the spring of Figure 5.

Figure 7 is an elevational view of the spiral wrap spring.

Figure 8 is an end view of the spring of Figure 7.

Figure 9 is a cross sectional view of a damper spring having ferrules inserted in both ends with a centrifugal weight shown in elevation.

Figure I0 is a cross sectional view of an arrangement similar to Figure 9 with an alternative version of weight shown in elevation.

Figure II is a cross sectional view similar to Figure 9, but with an alternative shape of ferrule.

Figure I2 is a cross sectional view similar to Figure 9, but with a weight having resilient end caps.

Figure I3 is a cross sectional view similar to Figure I2 except for the omission of the ferrules.

Figure I4 is a cross sectional view of a damper spring with a ferrule at one end and a weight shown in elevation at the opposite end.

Figure I5 is a cross sectional view similar to Figure I4, except for an alternative form of ferrule and a washer secured to the end of the weight.

Figure I6 is a partial cross sectional view similar to Figure I5, but showing an alternative method of securing the washer to the weight.

Figure I7 is a cross sectional view of a damper spring encapsulated by an elastomer.

Figure I8 is a cross sectional view of a damper spring containing an elastomeric plug with a non-compressible liquid or centrifugal weight therein.

Figure I9 is a cross sectional view of a wrap spring and end ferrules in a damper spring.

Figure 20 is an end elevational view of the arrangement of Figure I9.

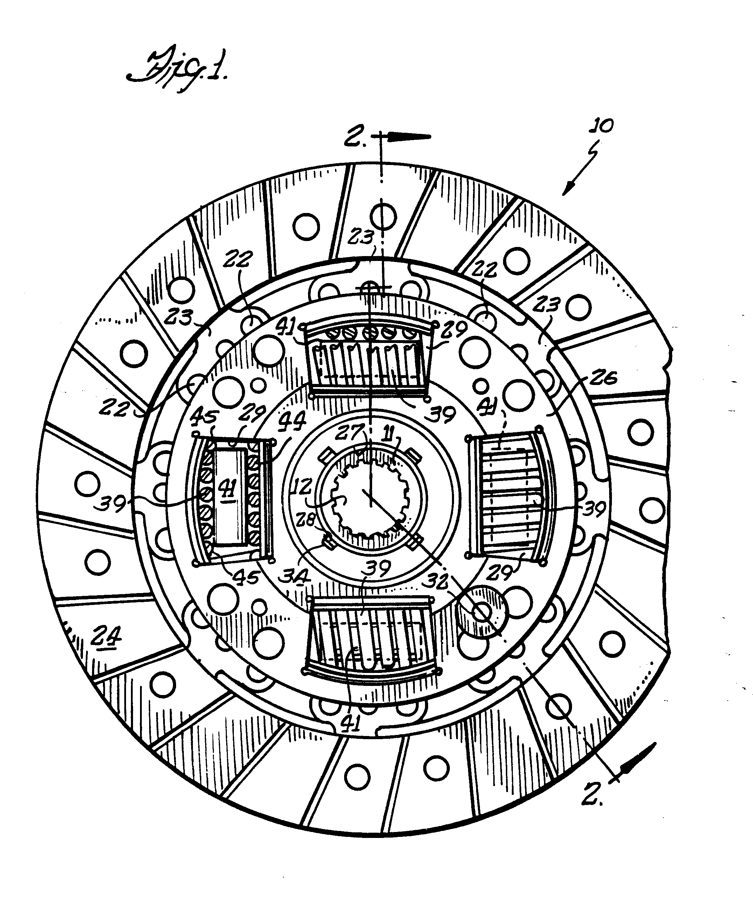

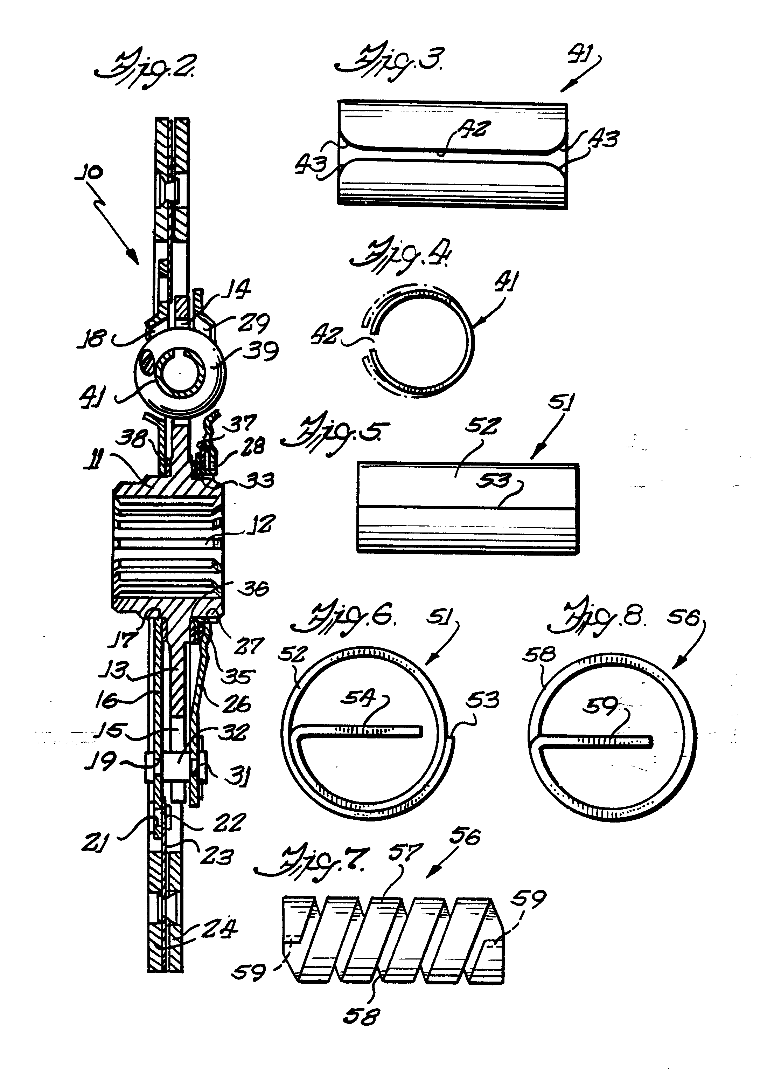

Figure 2I is a cross sectional view similar to Figure I9, but showing the damper spring compressed.

Figure 22 is a cross sectional view of a damper spring containing an elastomer tube.

Figure 23 is a cross sectional view of a damper spring containing an elastomer plug.

Figure 24 is a cross sectional view similar to Figure 22, but having rivets in the ends of the tube.

Figure 25 is a cross sectional view of a damper spring containing an elastomer plug with wear resistant caps secured thereto.

Figure 26 is an elevational view, with portions broken away or in cross section, of a damper spring with telescoping wrap springs between concentric springs.

Figure 27 is an end elevational view, with portions broken away, taken from the left hand end of Figure 26.

Figure 28 is a load-deflection curve of a clutch assembly without a friction lag spring.

Figure 29 is a similar load-deflection curve with friction lag springs installed.

Referring more particularly to the disclosure in the drawings wherein are shown illustrative embodiments of the present invention, Figures I and 2 disclose a clutch driven plate assembly I0, including a hub having a barrel II with a central splined opening I2 adapted to receive the splined end of a transmission input shaft (not shown), and an integral radial flange I3 containing circumferentially spaced windows I4 for damper springs 39 and peripheral notches I5 in the flange periphery. A clutch driven plate I6 has a central opening I7

receiving the hub barrel II, circumferentially spaced spring windows I8 axially aligned with windows I4, an inner circle of circumferentially spaced openings I9 and openings 2I adjacent the plate periphery. The openings 2I receive rivets 22 to secure the cushion springs 23 to the plate I6;; the annular friction facings 24 being suitably secured to the cushion springs 23.

A spring retainer plate 26 also has a central opening 27 having circumferentially spaced peripheral notches 28, circumferentially spaced spring windows 29 axially aligned with the windows I4 and I8, and openings 3I adjacent the outer periphery and aligned with openings I9 to receive spacer rivets 32 securing the plates I6 and 26 together in spaced relation; the spacer rivets extending through the peripheral notches I5 in the hub flange to allow limited relative rotation therebetween.

A piloting bushing 33 is journalled on the hub barrel II within the plate opening 27 and has tabs 34 received in the notches 28. A radial flange 35 on the bushing cooperates with annular spacers 36, and a Belleville washer 37 is located between the plate 26 and the flange 35 acting to urge the bushing aginst the spacers 36 to provide limited friction lag with the hub flange. Also, annular spacers 38 are located between the clutch plate I6 and the hub flange I3.

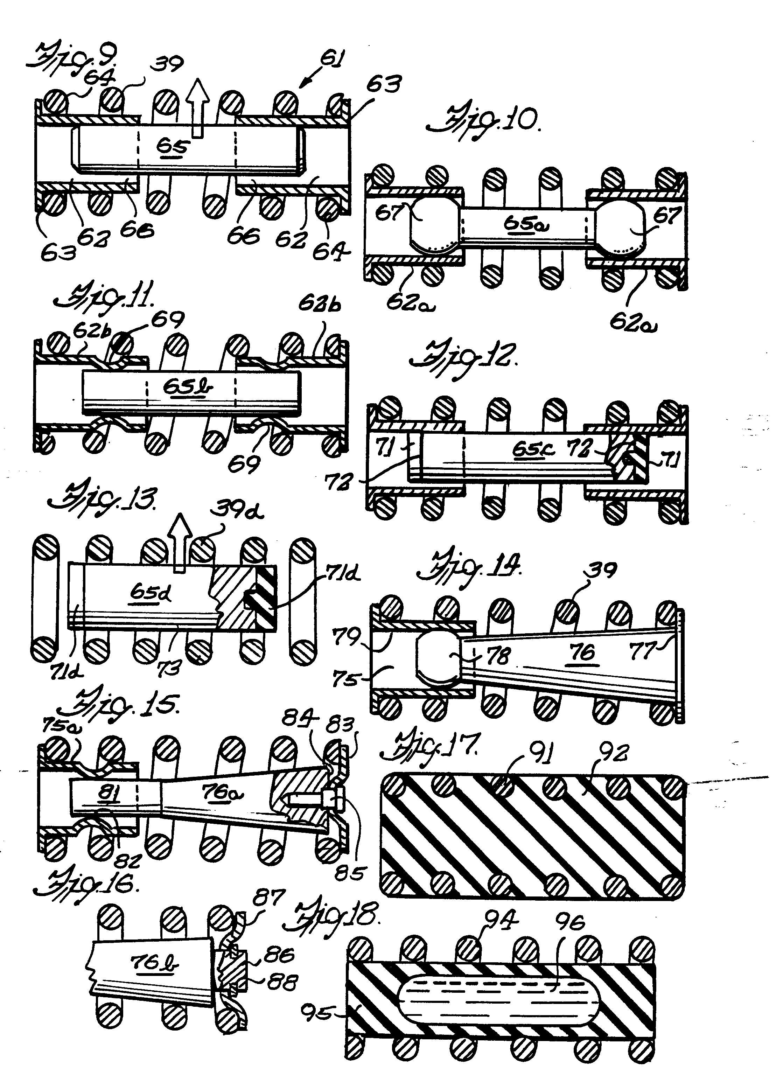

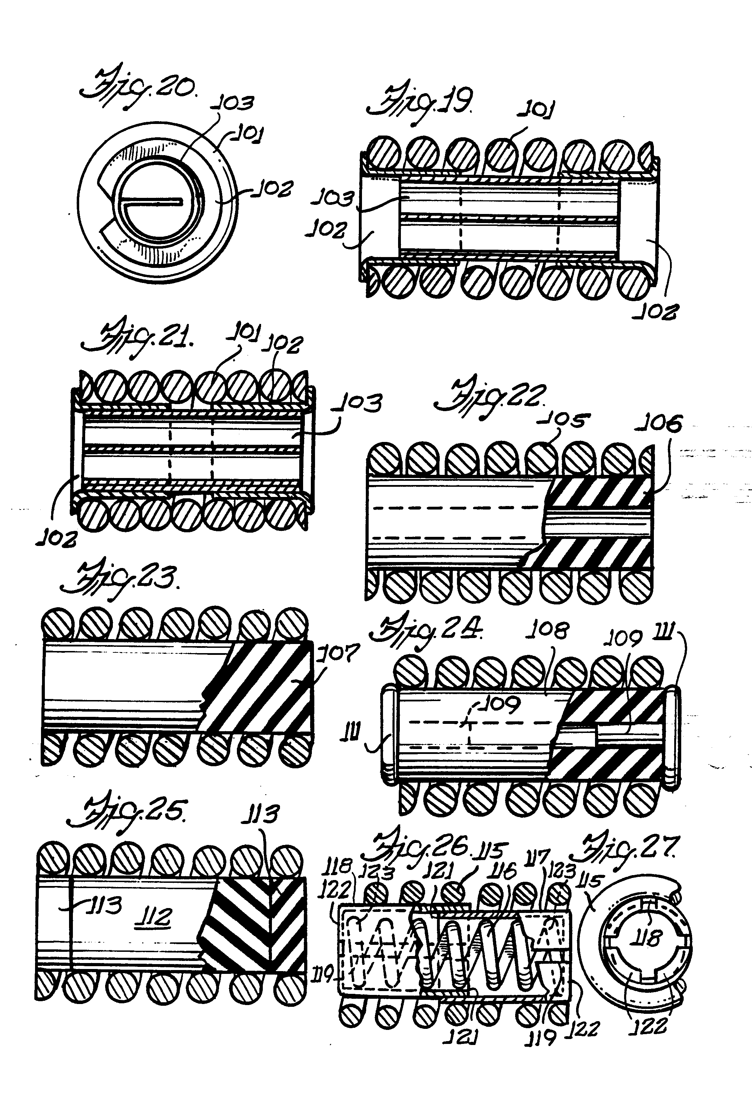

A damper spring 39 is located in each aligned set of windows I4, I8 and 29, and a wrap spring 4I in the form of a metal cylinder is positioned within each damper spring 39. The cylinder has a longitudinal slit 42 extending the length thereof, with the corners of the spring at the slit being chamfered or rounded as at 43. The normal outer diameter of the ·wrap spring is slightly greater than the inner diameter of the damper spring coils, so that the wrap spring must be compressed to be inserted in the damper spring and then released (see Figure 4). As seen in Figure I, the wrap spring 4I is shorter than the normal length of the damper spring 39.

The wrap spring is pre-loaded a specified amount against the inner diameter of the damper spring coils 44 causing friction between the wrap spring and the coils. This action inhibits the full free compression and release of the damper spring resulting in a friction lag. Since the wrap spring is shorter, the end coils 45 can move uninhibited with light loads. With medium loads, the center coils 44 will also start to move with partial friction, and with heavy loads, the damper spring 39 will be compressed and all the coils 44 and 45 will engage the wrap spring 4I so that they will all move with friction lag.

These actions result in a move to full friction lag proportional to damper torque in addition to the fixed friction lag at the hub pilot diameter accomplished through the friction spacers 36 and 38.

Therefore, at light damper torques only the normal friction lag will operate; at medium damper torques, the normal lag and partial secondary lag caused by the wrap springs will operate; and at higher damper torques, both frictional lags will operate fully. It is also contemplated that the secondary friction lag from the wrap springs may be utilized as the only friction in a conventional clutch assembly or in a "cam" type assembly as disclosed in U.S. Patent No. 556,517, issued December 3, 1985.

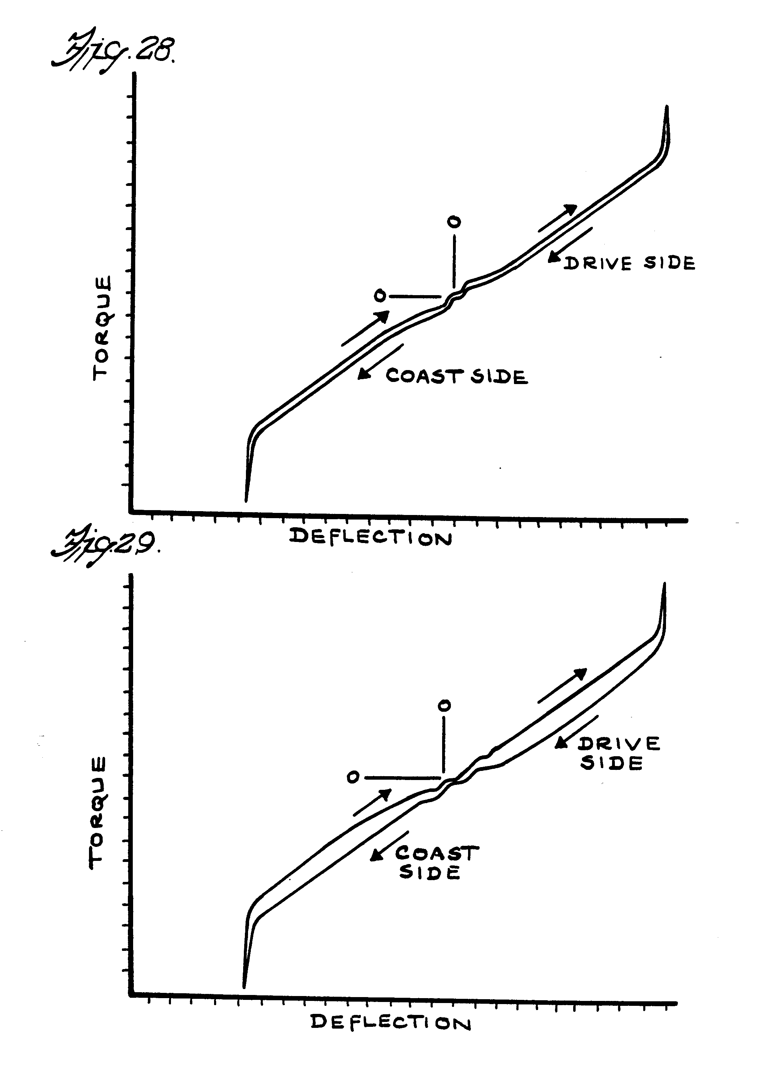

Figures 5 and 6 disclose a second embodiment of wrap spring 51 comprising a metallic spring band 52 formed in a coil with a free outer edge 53 and a bent inner end 54 within the coil. This spring 51 operates in the same manner as wrap spring 41.

Figures 7 and 8 disclose a third embodiment of wrap spring 56 having a relatively narrow band 57 formed in a spiral coil 58 with opposite inwardly bent free ends 59. Unlike wrap springs 41 and 51, the length of wrap spring 56 is substantially the same length as the damper spring 39 encompassing it.

Figure 9 discloses an alternative embodiment of friction lag device 61 including a pair of oppositely disposed metal ferrules 62,62 inserted in the opposite ends of a damper spring 39; each ferrule having a radial flange 63 abutting the end coil 64 of the damper spring. The ferrules are complementarily received in the spring, and a centrifugal weight 65 is located within the ferrules with a clearance space 66 between the weight and the ferrules to prevent binding when the damper spring is compressed with a scissors action. The friction lag is created by centrifugal force acting on the weight during rotation of the clutch assembly to cause the weight to press against the ferrules and cause friction which inhibits axial deflection of the spring producing a friction lag.

As seen in Figure 10, the weight 65a may be provided with cam surfaces 67,67 at each end engaging the ferrules 62a to prevent binding. In the alternative, the ferrules 62b may have camming surfaces 69 to engage the weight 65b to prevent binding (see Figure 11). Also, as seen in Figure 12, resilient caps 71 may be suitably secured to the ends 72 of the weight 65c. A further embodiment seen in Figure 13 discloses a centrifugal weight 65d with resilient end caps 71d in the damper spring 39d, but omitting the ferrules. Frictional contact in this instance is between the exterior surface 73 of the weight pressing on the interior surfaces of the spring coils and inhibiting axial deflection of the spring.

Considering Figure 14, a damper spring 39 is shown having a ferrule 75 received within one end of the spring and substantially conical weight 76 inserted in the opposite end of the spring. The weight has a shoulder or flange 77 to locate against the end coil of the spring and a camming surface 78 on its opposite end to engage the inner surface 79 of the ferrule. As seen in Figure 15, the free end 81 of the weight 76a can be substantially cylindrical while the ferrule 75a has a camming surface 82 formed thereon. Also in that instance, a washer 83 is secured to the end 84 of the weight by a rivet 85 to provide a swivel action to prevent binding; the washer replacing the shoulder 77 of Figure 14. Figure 16 discloses a reduced end portion 86 on the weight 76b receiving a washer 87 retained by a snap ring 88 received in a suitable groove in end portion 86. This washer also swivels relative to the weight. In the embodiments of Figures 14, 15 and 16, as the clutch assembly rotates, the centrifugal force causes the weight to press against the ferrule causing a friction force, which inhibits the axial deflection of the spring and produces a friction lag. The cam surface on the weight or ferrule and/or the swivel end on the weight prevents binding when the spring is compressed with a scissors action.

Figure 17 discloses a damper spring 91 used in the clutch assembly, such as shown in Figures 1 and 2 wherein the spring is encapsulated in an elastomeric material 92 which can have different durometers. The purpose of the elastomer is to inhibit the free resonance of the damper spring by surrounding the coils in a damping manner. The damping is caused by the displacement of the elastomer and its resistance to do so as the spring deflects. The damping action can be increased by using a higher durometer elastomer. It is intended that the harmonic properties of the damper spring will be changed for the purpose of tuning the clutch assembly to reduce driveline gear rattles. The resonance of the damper spring will be reduced in a manner similar to the tone change in a musical goblet when it is filled to different levels with water.

Figure 18 discloses a damper spring 94 receiving an elastomer plug 95 therein containing a non-compressible center 96, such as a non-compressible liquid or a centrifugal weight. As the damper spring 94 compresses, the elastomer is displaced outwardly by the non-compressible liquid to interfere with the free operation of the spring coils to cause a damping action. It is intended that this action will change the harmonic properties of the spring to tune the clutch assembly to remove driveline gear rattles.

In Figures 19 through 21, a normal damper spring 101 is shown containing a pair of cups or ferrules 102 inserted into the opposite ends of the spring, and a wrap spring 103, similar to that shown in Figures 5 and 6 is preloaded in place within the ferrules. When the damper spring 101 is compressed, the ferrules 102,102 are moved inward toward each other, causing the wrap spring 103 to

slide within them. The preloading of the wrap spring causes it to expand radially outward causing friction between its outer diameter and the inner diameters of the ferrules.

With respect to Figures 22 through 25, an elastomeric tube 106 is forced into the inner diameter of damper spring 105 in Figure 22; a solid elastomeric block 107 is provided within the spring in Figure 23; the elastomeric tube 108 of Figure 24 has rivets 109 with enlarged heads 111 inserted into the ends of the tube; and the elastomeric tube of plug 112 has wear-resistant caps 113,113 suitably secured thereto in Figure 25. In all of these figures, expansion of the elastomeric device upon compression of the damper spring interferes with the free resonance of the spring coils, thus resulting in a friction lag due to elastomeric expansion and the natural molecular hysteresis of the elastomer material. The rivets or caps act to protect the ends of the plug from damage by the hub or retainer plates during compression of the springs.

Figures 26 and 27 disclose a further embodiment for a damper spring 115 having an inner concentric compression spring 116 and a pair of telescoping C-shaped tubular wrap springs 117,118. Each tubular wrap spring has a longitudinal slit 119 extending the length thereof from an inner open end 121 to an outer end having inturned flange portions 122 contacting an end 123 of the inner spring 116. The wrap springs at their inner open ends telescope and overlap in a circumferential direction. Upon torque being applied to the clutch both the inner and outer springs 116 and 115, respectively are compressed and the wrap springs slide inward relative to each other to provide friction lag. When the springs are released, the inner spring 116 acts on the end flange portions 122 to return the wrap springs to their starting positions.

Figure 28 shows a typical load-deflection curve run on a clutch assembly with conventional damper springs, and Figure 29 illustrates a load-deflection curve for a clutch assembly with a wrap spring installed in each damper spring illustrating the effect of the secondary friction lag occurring due to the wrap springs. A similar effect would be shown for the various other types of friction lag devices as applied to the damper spring of a conventional clutch assembly.

## Claims

1. A clutch driven plate assembly (10) comprising a hub having a barrel (11) and integral radial flange (13), a clutch driven plate (16) journalled on said hub barrel and carrying friction facings (24) thereon, a spring retainer plate (26) on the opposite side of the hub flange from and secured to said clutch plate to sandwich said hub flange (13) therebetween, said hub flange and plates having a plurality of circumferentially spaced axially aligned sets of spring windows (14,18,29) therein, and a damper spring received in each set of aligned windows to yieldably resist relative rotation between said plates and said hub, the improvement comprising means (41) positioned within the coils of each damper spring (39) to inhibit axial deflection of the spring and produce friction lag.

2. A clutch driven plate assembly as set forth in Claim 1, wherein said means (41) frictionally engages the inner diameter of said damper spring coils (44).

3. A clutch driven plate assembly as set forth in Claim 1, wherein said means includes a wrap spring that is shorter in length than the uncompressed damper spring.

4. A clutch driven plate assembly as set forth in Claim 3, in which said wrap spring is a cylindrical spring steel member having a longitudinal slot (42) extending the length of the member and terminating in rounded corners (43).

5. A clutch driven plate assembly as set forth in Claim 3, in which said wrap spring (51) is a spring steel strip (52) wound into a round, tubular-like shape with a blade-like internal end (54).

6. A clutch driven plate assembly as set forth in Claim 1, in which said means is a wrap spring (56) of the same length as the damper spring and formed of a spring steel strip wound (57) in a spiral tubular shape (58) with tangs (59) at the opposite ends.

7. A clutch driven plate assembly as set forth in Claim 3, wherein a pair of ferrules (102) are inserted in the opposite ends of each damper spring (101), and said wrap spring (103) is positioned within said ferrules.

8. A clutch driven plate assembly as set forth in Claim 1, wherein said means includes a centrifugal weight (65) positioned within the coils of said damper spring (31) and adapted to frictionally engage said coils upon rotation of said clutch assembly.

9. A clutch driven plate assembly as set forth in Claim 8, wherein a clearance (66) is provided between said centrifugal weight (65) and spring coils to prevent binding when the spring is compressed with a scissors action.

10. A clutch driven plate assembly as set forth in Claim 8, wherein said weight (65d) has resilient caps (71d) secured thereto.

11. A clutch driven plate assembly as set forth in Claim 8, including a pair of ferrules (62) inserted into the opposite ends of each damper spring (39), said centrifugal weight (65) frictionally engaging said ferrules.

12. A clutch driven plate assembly as set forth in Claim 11, wherein the opposite ends (67) of said weight (65a) are enlarged to conformably engage said ferrules (62a) and provide a camming action.

13. A clutch driven plate assembly as set forth in Claim 11, wherein each ferrule (62b) has an inwardly extending camming surface (69) conformably engaging said weight (65b).

14. A clutch driven plate assembly as set forth in Claim 8, wherein said weight (76) is substantially conical with a shoulder (77) and the enlarged end to engage an end of said damper spring (39), and a ferrule (75) inserted in the opposite end of the damper spring.

15. A clutch driven plate assembly as set forth in Claim 14, wherein the inner smaller end of said weight (76) has an enlarged camming surface (78) engaging said ferrule (75).

16. A clutch driven plate assembly as set forth in Claim 14, wherein said ferrule (75a) has an inwardly extending camming surface (82) engaging the inner end (81) of said weight (76).

17. A clutch driven plate assembly as set forth in Claim 14, wherein said shoulder is formed of a washer riveted to said weight (76a) for swivelling movement.

18. A clutch driven plate assembly as set forth in Claim 14, wherein said shoulder is a washer (87) received on a reduced end (86) of said weight (76a) and retained by a snap ring (88) for swivelling motion.

19. A clutch driven plate assembly as set forth in Claim 1, wherein said means comprises a damper spring (91) encapsulated in an elastomeric material (92).

20. A clutch driven plate assembly as set forth in Claim 1, wherein said means includes an elastomeric plug (95) conformably received within the coils of said damper spring (94) for outward displacement upon compression of said spring.

21. A clutch driven plate assembly as set forth in Claim 20, wherein said plug (95) includes a non-compressible liquid center (96).

22. A clutch driven plate assembly as set forth in Claim 20, wherein said plug (106) is a hollow tube.

23. A clutch driven plate assembly as set forth in Claim 22, including a pair of rivets (109) inserted into the opposite ends of said tube (108).

24. A clutch driven plate assembly as set forth in Claim 20, including wear resistant caps (113) secured to the opposite ends of said plug (112).

25. A clutch driven plate assembly as set forth in Claim 3, wherein said damper spring includes a pair of concentric compression springs (115,116), and said wrap spring includes a pair of C-shaped wrap springs (117,118) telescoping together between said concentric springs, each wrap spring having a longitudinal slit (119) extending the length of the tubular spring.

26. A clutch driven plate assembly as set forth in Claim 25, wherein each wrap spring (117,118) has an open inner end (121) and inwardly bent flange portions (122) at the outer end contacting the outer ends (123) of said inner spring (116), said wrap springs overlapping in the circumferential direction.

Fig. 1.

Fig.2.

Fig.3.

Fig.4.

Fig.5.

Fig.6.

Fig.7.

Fig.8.

Fig. 9
Fig. 10
Fig. 11
Fig. 12
Fig. 13
Fig. 14
Fig. 15
Fig. 16
Fig. 17
Fig. 18

Fig.20.

Fig.19.

Fig.21.

Fig.22.

Fig.23.

Fig.24.

Fig.25.

Fig.26.

Fig.27.

*Fig. 28.*

TORQUE

O

O

DRIVE SIDE

COAST SIDE

DEFLECTION

*Fig. 29.*

TORQUE

O

O

DRIVE SIDE

COAST SIDE

DEFLECTION

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 371 609 (S.A. FERODO)<br><br>* Whole document * | 1,2,6, 20,22 | F 16 D 13/68 |
| A | | 3,8,9, 11-16 | |
| | --- | | |
| X | FR-A-2 371 608 (S.A. FERODO)<br><br>* Whole document * | 1,2,6, 20,22 | |
| A | | 3 | |
| | --- | | |
| X | FR-A-1 086 537 (DANA CORP.)<br>* Page 4, right-hand column, line 6 - page 5, line 8; figures 3,5,6 * | 1,2 | |
| | | | TECHNICAL FIELDS SEARCHED (Int. Cl.4) |
| A | | 3-5,7, 8 | F 16 D |
| | --- | | |
| X | FR-A-1 213 399 (S.A. A. SAURER)<br>* Whole document * | 1 | |
| A | | 17 | |
| | --- | | |
| A | FR-A-1 346 144 (BORG WARNER CORP.) | | |
| | ---      -/- | | |

The present search report has been drawn up for all claims

| Place of search | Date of completion of the search | Examiner |
|---|---|---|
| THE HAGUE | 04-12-1986 | BEGUIN C.P. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | FR-A-2 395 428 (FICHTEL & SACHS AG)  ----- | | |

**TECHNICAL FIELDS SEARCHED (Int. Cl.4)**

The present search report has been drawn up for all claims

| Place of search | Date of completion of the search | Examiner |
|---|---|---|
| THE HAGUE | 04-12-1986 | BEGUIN C.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82